(19) Europäisches Patentamt
European Patent Office
Office européen des brevets

(11) EP 2 398 240 A1

(12) EUROPEAN PATENT APPLICATION

(43) Date of publication:
21.12.2011 Bulletin 2011/51

(51) Int Cl.:
$H04N\ 7/26^{(2006.01)}$   $H04N\ 7/50^{(2006.01)}$

(21) Application number: 10166229.4

(22) Date of filing: 16.06.2010

(84) Designated Contracting States:
AL AT BE BG CH CY CZ DE DK EE ES FI FR GB GR HR HU IE IS IT LI LT LU LV MC MK MT NL NO PL PT RO SE SI SK SM TR
Designated Extension States:
BA ME RS

(71) Applicant: CANON KABUSHIKI KAISHA
Ohta-ku
Tokyo 146-8501 (JP)

(72) Inventors:
• Henry, Félix
35700, Rennes (FR)

• Gisquet, Christophe
35000, Rennes (FR)

(74) Representative: Hitching, Peter Matthew
Canon Europe Ltd
3 The Square
Stockley Park
Uxbridge
Middlesex
UB11 1ET (GB)

(54) **A method and device for encoding and decoding a video signal**

(57) The invention concerns a method for encoding and decoding a digital signal, and associated devices. A method for encoding a video signal composed of video frames, comprising a block division of said video frames is proposed. The method comprises, for the encoding of at least one original block ($B_{orig}$) of a frame of the video signal, a step of obtaining (S300) an initial reference block ($B_{ref}$) corresponding to said original block ($B_{orig}$). Further, the method comprises- carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time. A final reference block ($B_{final}$) is determined (S316), based on a predetermined criterion, from among the initial reference block and a filtered reference block or blocks obtained by carrying out the filtering process said one or more times, and the original block is encoded (S324) by reference to said final reference block ($B_{final}$). The invention applies to any type of reference block, obtained either from the same frame as the original block, in case of spatial prediction or from another frame of the video signal, in case of temporal prediction.

Figure 3

EP 2 398 240 A1

**Description**

Field of the invention

The invention relates to a method and device for encoding a video signal and a method and device for decoding a compressed bitstream.

The invention belongs to the field of digital signal processing. A digital signal, such as for example a digital video signal, is generally captured by a capturing device, such as a digital camcorder, having a high quality sensor. Given the capacities of modern capture devices, an original digital signal is likely to have a very high resolution, and, consequently, a very high bitrate. Such a high resolution, high bitrate signal is too large for convenient transmission over a network and/or convenient storage.

Description of the prior-art

In order to solve this problem, it is known in the prior art to compress the original video signal into a compressed bitstream.

Most video compression formats, for example H.263, H.264, MPEG1, MPEG2, MPEG4, SVC, referred to collectively as MPEG-type formats, use block-based discrete cosine transform (DCT) and motion compensation to remove spatial and temporal redundancies. They can be referred to as predictive video formats. Each frame or image of the video signal is divided into slices which are encoded and can be decoded independently. A slice is typically a rectangular portion of the image, or more generally, a portion of an image. Further, each slice is divided into macroblocks (MBs), and each macroblock is further divided into blocks, typically blocks of 8x8 pixels. The encoded frames are of two types: predicted frames (either predicted from one reference frame called P-frames or predicted from two reference frames called B-frames) and non predicted frames (called Intra frames or I-frames).

For a predicted P-frame, the following steps are applied at the encoder:

- motion estimation applied to each block of the considered predicted frame with respect to a reference frame, resulting in a motion vector per block pointing to a reference block of the reference frame;
- prediction of the considered frame from the reference frame, where for each block, the difference block between the block and its reference block pointed to by the motion vector is calculated. The difference block is called a residual block or residual data. A DCT is then applied to each residual block, and then, quantization is applied to the transformed residual data; and
- entropy encoding of the motion vectors and of the quantized transformed residual data.

In the case of B-frames, two reference frames and two motion vectors are similarly used for prediction.

To encode an Intra frame, the image is divided into blocks of pixels, a DCT is applied on each block, followed by quantization and the quantized DCT coefficients are encoded using an entropy encoder.

In H.264, Intra encoded blocks can be predicted from surrounding pixel values using one of the predefined Intra prediction modes. In this case, the difference between the predicted block and the original block is also called the residual block, and it is encoded by applying a DCT, followed by quantization and the quantized DCT coefficients are encoded using an entropy encoder.

In general terms, a given block of pixels of a current frame can be encoded by encoding the difference between the block and a reference block or predictor block, such an encoding being referred to as encoding by reference to a reference block.

In practical applications, the encoded bitstream is either stored or transmitted through a communication channel.

At the decoder side, for the classical MPEG-type formats, the decoding achieves image reconstruction by applying the inverse operations with respect to the encoding side.

There is a need for improving the video compression by providing a better distortion-rate compromise for compressed bitstreams, either a better quality at a given bitrate or a lower bitrate for a given quality.

A possible way of improving a video compression algorithm is improving the predictive encoding, aiming at ensuring that a reference block is close to the block to be predicted. Indeed, if the reference block is close to the block to be predicted, the coding cost of the residual is diminished.

Several methods are known in the prior art to optimize the motion compensation. In particular, it is known, in video formats such as H264, to search for reference blocks at sub-pixel precision, generating half-pixel or quarter-pixel interpolated values.

The document WO2009126936 discloses a method for filtering a reference block provided for motion compensation. The encoder interpolates pixel values of reference video data based on a plurality of different interpolation filters, and some information on the interpolation filter used is encoded in the bitstream and transmitted to the decoder. This method uses a predefined set of interpolation filters: the encoding of the residual data obtained using interpolated reference data is simulated for each of the interpolation filters of the predetermined set and the interpolation filter that achieves the highest compression is selected. This method applies the interpolation filters systematically without fully taking into account the local characteristics of the video signal, since a limited predefined set of filters is used. Further, many calculations are necessary to select the interpolation filters.

SUMMARY OF THE INVENTION

It is desirable to address one or more of the prior art drawbacks. To that end, the invention relates to a method for encoding a video signal composed of video frames, comprising a block division of said video frames. The encoding method comprises, for the encoding of at least one original block of a frame of the video signal, the steps of:

- obtaining an initial reference block corresponding to said original block,
- carrying out, one or more times, a filtering process which inputs a reference block and which filters the input reference block to obtain a filtered reference block, wherein the input reference block in the filtering process carried out the first said time is said initial reference block, and the input reference block in the filtering process carried out each subsequent said time, if any, is the filtered reference block obtained in the filtering process carried out the previous said time,

- determining, based on a predetermined criterion, a final reference block from among the initial reference block and a filtered reference block or blocks obtained by carrying out the filtering process said one or more times, and
- encoding said original block by reference to said final reference block.

The invention provides a method for improving the encoding by reference by testing whether one or several filterings applied on a reference block selected for the encoding by reference of a block to encode bring an encoding improvement according to a predetermined criterion. Therefore, a best final reference block among the initial reference block, typically selected either by Intra or Inter prediction, and a filtered reference block obtained after one or more filterings, is selected according to the invention. The original block is coded by reference to the final reference block, i.e. the difference between the final reference block and the original block is encoded, as explained above.

In particular, the invention makes it possible to select, for a given reference block, the number of applications of the filtering, including no filtering if it proves a better performance according to the predetermined criterion, so as to adapt to the local characteristics of the video signal and to improve the compression ratio. The invention applies to any type of reference block, obtained either from the same frame as the original block, in case of spatial prediction or from another frame of the video signal, in case of temporal prediction.

The number of times the filtering process is applied is equal or higher to the number of filterings to be applied to obtain a final reference block, allowing the testing of the efficiency of either filtering one or several times or not filtering according to the predetermined criterion, typically a criterion related to compression efficiency.

In the meaning of the invention, a video signal is a signal comprising either one digital image or a sequence of digital images.

According to a particular embodiment, the method comprises, after each applying of the filtering process, a step of obtaining a modified block resulting from encoding and decoding of the difference between the filtered reference block and the original block, and wherein said predetermined criterion takes into account said original block and said modified block obtained.

Advantageously, this embodiment takes into account the actual potential result obtained via encoding and decoding a filtered reference block and determines the number of filtering applications to obtain the final reference block accordingly. The number of filterings can therefore be adapted for example to optimize a criterion taking into account the distortion between the original block and the modified block and/or the encoding rate in number of bits of the difference between the original block and the modified block at each iteration of the filtering process. In a particular embodiment, a distortion-rate compromise between the original block and the modified block is minimized.

According to an embodiment, the method comprises, before at least one step of applying a filtering process, a step of determining at least one filtering parameter of said filtering process to apply, and the at least one filtering parameter determined is used in the filtering process.

Using a parameterized filtering process and determining at least one filtering parameter at one or at each application of the filtering process allow even better taking into account the local characteristics of the video signal.

According to an embodiment, the step of determining at least one filtering parameter is applied only for the first application of the filtering process, said parameters determined being systematically used in the filtering process carried out each subsequent said time.

Advantageously, the filtering parameter or parameters are determined at the first application of the filtering process only, saving computational time. The overall distortion-rate compromise is still significantly improved for the video signal encoding.

According to a particular embodiment, in the step of determining at least one filtering parameter, said at least one filtering parameter is determined by minimization of a criterion taking into account the original block and the filtered reference block. In practice, said at least one parameter is chosen by testing the filtering process with each of a plurality of possible filtering parameters to obtain a test filtered reference block, and choosing the filtering parameter or parameters among the plurality of filtering parameters which minimizes a criterion taking into account the original block and each test filtered reference block.

Advantageously, the filtering parameter or parameters can be determined with a low number of calculations, since there is no need to perform a simulation of encoding and decoding for each test filtered reference block. In a particular embodiment, a distortion-rate compromise between the original block and the filtered reference block is minimized. However, other cost criteria taking into account the original block and the filtered reference block may be minimized to determine the filtering parameters.

Therefore, advantageously, it is envisaged to apply a filtering process to a reference block to obtain a final reference block improving the overall performance of the encoding, and the filtering process is defined by a plurality of parameters, firstly a number of iterations of the filtering, if any, determined based the outcome of the actual encoding, and secondly filtering parameters defining the filtering to be applied at each iteration, if any, those parameters being determined by a 'local' optimization which does not imply a simulation of the actual encoding performance. Advantageously, the number of calculations is largely diminished, while still bringing a substantial improvement in terms of compression performance.

According to an embodiment, the at least one filtering parameter comprises at least one value representative of a filter selected from a predetermined set of filters. In particular, one or several oriented filters, selected among a set of oriented filters, can be chosen for the filtering of the input reference block at each application of the filtering. Advantageously, oriented filters take into account local edges and textures. In an advantageous embodiment, the filtering parameters are determined once, at the first step of applying the filtering process and they are subsequently used, bringing a saving in terms of computational time, without any quality decrease.

According to an embodiment, the at least one filtering parameter comprises at least one value representative of a context function wherein a context function is a function that, when applied to a given sample of a block of samples, takes into account a predetermined number of other samples of said block of samples and outputs a context value. The use of context functions allows taking into account the local characteristics of the input reference block in a simple and efficient way. Advantageously, a context function is determined once, at the first step of applying the filtering process and the context function so determined is subsequently used, bringing a saving in terms of computational time, without any quality decrease.

According to an embodiment, the step of determining at least one filtering parameter comprises:

- applying a context function of a predetermined set of context functions to the input reference block,
- for each subset of samples of the input reference block for which said context function outputs a same context value, selecting a filter of said set of predetermined filters, associated with said context value, which minimizes a filtering cost on said subset of samples.

Advantageously, the filter that results in minimizing a filtering cost criterion, for example a rate-distortion cost, is chosen for each subset of samples associated with the same context value.

Further, an item of information representative of each selected filter is stored in association with a corresponding context value. The association between context value and selected filters is therefore simple.

According to an embodiment, the steps of applying a context function and, for each subset of samples of the input reference block for which said context function outputs a same context value, selecting a filter, are applied for each of a plurality of context functions, and an optimal context function associated with the input reference block is selected.

This allows even a better adaptation to the local characteristics of the video signal.

According to an embodiment, the step of applying said filtering process using said at least one filtering parameter comprises:

- applying said optimal context function associated with the input reference block to obtain a context value for each sample of the block, and
- for each sample of the input reference block, obtaining the filter associated with the context value obtained for said sample, and
- applying said filter on said sample of the input reference block to obtain a filtered value.

The filtering process is therefore light in terms of computation, since the filter is given by the application of a context function which takes into account a small number of values of the neighbourhood of a sample and is very easy to compute. According to a particular embodiment, the method further comprises a step of encoding at least one item of information indicating whether at least one filtering process is applied to obtain said final reference block.

In particular, such an item of information is of the form of a filtering indicator comprising a binary value (e.g. 0 or 1) for each application of a filtering process.

In a particular embodiment, said at least one item of information is representative of a number of times said filtering process has been applied to an input reference block to obtain said final reference block.

According to an embodiment, the method further comprises, for each said modified block, a step of obtaining a rate associated with such an item of information representative of the number of filterings applied to obtain said modified block, which obtained rate is taken into account in said predetermined criterion for determining said final reference block.

The rate overhead, which is typically a bitrate, necessary to encode such an item of information is quite low and can be advantageously taken into account in the determination of the number of filterings, via the predetermined criterion applied, in particular when said predetermined criterion takes into account the encoding rate in number of bits. Therefore, the method ensures that the overall rate-distortion compromise is improved using the encoding method proposed.

According to an embodiment, the final reference block is obtained by at least one application of said filtering process, and said item of information comprises, for each application of the filtering process, a filtering indicator representative of an application of said filtering process, followed by an information representative of said at least one filtering parameter determined for said application of the filtering process.

Advantageously, if the filtering process parameters are determined for each filtering application at the encoder, they can be signaled to the decoder.

According to another aspect, the invention relates to a device for encoding a video signal composed of video frames, comprising a block division of said video frames. The encoding device comprises, for the encoding of at least one original block of a frame of the video signal:

- means for obtaining an initial reference block corresponding to said original block,
- means for carrying out, one or more times, a filtering process which inputs a reference block and which filters the input reference block to obtain a filtered reference block, wherein the input reference block in the filtering process carried out the first said time is said initial reference block, and the input reference block in the filtering process carried out each subsequent said time, if any, is the filtered reference block obtained in the filtering process carried out the previous said time,
- means for determining, based on a predetermined criterion, a final reference block from among the initial reference block and a filtered reference block or blocks obtained by carrying out the filtering process said one or more times, and
- means for encoding said original block by reference to said final reference block.

The encoding device comprises means for implementing all the characteristics of the encoding method as recited above.

According to yet another aspect, the invention also relates to an information storage means that can be read by a computer or a microprocessor, this storage means being removable, and storing instructions of a computer program for the implementation of the method for encoding a video signal as briefly described above.

According to yet another aspect, the invention also relates to a computer program product that can be loaded into a programmable apparatus, comprising sequences of instructions for implementing a method for encoding a video signal as briefly described above, when the program is loaded into and executed by the programmable apparatus. Such a computer program may be transitory or non transitory. In an implementation, the computer program can be stored on a non-transitory computer-readable carrier medium.

The particular characteristics and advantages of the device for encoding a video signal, of the storage means and of the computer program product being similar to those of the video signal encoding method, they are not repeated here.

According to yet another aspect, the invention relates to a method for decoding a compressed bitstream comprising a video signal composed of video frames, the video frames comprising blocks. The decoding method comprises, for the decoding of at least one block to be decoded of a frame of the video signal, the steps of:

- obtaining an initial reference block for said block to be decoded,
- extracting an item of information from said compressed bitstream,
- obtaining, based on said item of information, a final reference block for said block to be decoded, said final reference block being either the initial reference block or a filtered reference block, said filtered reference block being obtained by carrying out, one or more times, a filtering process which inputs a reference block and which filters the input reference block to obtain a filtered reference block, wherein the input reference block in the filtering process carried out the first said time is said initial reference block, and the input reference block in the filtering process carried out each subsequent said time, if any, is the filtered reference block obtained in the filtering process carried out the previous said time, and

- decoding the block to be decoded by reference to said final reference block obtained.

Advantageously, the final reference block obtained for the current block is selected among the initial reference block and a filtered reference block, obtained after one or more filterings of an input reference block, and consequently the quality of the reconstructed block after decoding is enhanced.

According to an embodiment, the step of obtaining a final reference block comprises extracting an item of information from said compressed bitstream representative of the number of times said filtering process is applied to obtain said final reference block.

Advantageously, the compressed bitstream carries information, transmitted by the encoder, on the application of a filtering one or more times or no application of filtering to obtain a final reference block. The information transmitted by the encoder may advantageously be based on a predetermined criterion taking into account the original block to encode, to obtain an optimized compression.

According to yet another aspect, the invention relates to a device for decoding a compressed bitstream comprising a video signal composed of video frames, the video frames comprising blocks. The decoding device comprises, for the decoding of at least one block to be decoded of a frame of the video signal:

- means for obtaining an initial reference block ($B_{ref}$) for said block to be decoded,
- means for extracting an item of information from said compressed bitstream,
- means for obtaining, based on said item of information, a final reference block for said block to be decoded, said final reference block being either the initial reference block or a filtered reference block, said filtered reference block being obtained by carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time, and
- means for decoding the block to be decoded by reference to said final reference block obtained.

According to yet another aspect, the invention also relates to an information storage means that can be read by a computer or a microprocessor, this storage means being removable, and storing instructions of a computer program for the implementation of the method for decoding a compressed bitstream comprising a video signal as briefly described above.

According to yet another aspect, the invention also relates to a computer program product that can be loaded into a programmable apparatus, comprising sequences of instructions for implementing a method for decoding a a compressed bitstream comprising a video signal as briefly described above, when the program is loaded into and executed by the programmable apparatus. Such a computer program is transitory or non-transitory. In an implementation, the computer program can be stored on a non-transitory computer-readable carrier medium.

The particular characteristics and advantages of the device for decoding a compressed bitstream comprising a video signal, of the storage means and of the computer program product being similar to those of the method of decoding a compressed bitstream comprising a video signal, they are not repeated here.

According to yet another aspect, the invention relates to a compressed bitstream comprising a video signal composed of video frames, the video frames comprising blocks, and at least one original block of a frame of the video signal being encoded by obtaining an initial reference block corresponding to said original block, and by carrying out, one or more times, a filtering process which inputs a reference block and which filters the input reference block to obtain a filtered reference block, wherein the input reference block in the filtering process carried out the first said time is said initial reference block, and the input reference block in the filtering process carried out each subsequent said time, if any, is the filtered reference block obtained in the filtering process carried out the previous said time, and by determining, based on a predetermined criterion, a final reference block from among the initial reference block and the filtered reference block or blocks obtained by carrying out the filtering process said one or more times, and by encoding said original block by reference to said final reference block. The compressed bitstream comprises data representative of an encoded difference between said original block and said final reference block, and at least one item of information indicating how said final reference block was determined.

According to a further feature, at least one said item of information indicates whether the final reference block is said initial reference block or is such a filtered reference block obtained by carrying out the filtering process said one or more times.

According to a further feature, at least one said item of information indicates a number of times said filtering process was carried out to obtain the final reference block.

Advantageously, the compressed bitstream according to the invention comprises items of information allowing to improve the compression ratio and to obtain in particular a better distortion-rate compromise for compressed bitstreams, either a better quality at a given bitrate or a lower bitrate for a given quality.

Such a compressed bitstream may either be stored in a storage device, for example in a file, or streamed from a server device to a client device in a client/server application.

According to yet another aspect of the present invention there is provided a method for encoding a video signal composed of video frames, the video frames comprising blocks, characterized in that it comprises, for the encoding of at least one original block of a frame of the video signal, the steps of:

- obtaining an initial reference block corresponding to said original block,
- carrying out, two or more times, a filtering process which inputs a reference block and which filters the input reference block to obtain a filtered reference block, wherein the input reference block in the filtering process carried out the first said time is said initial reference block, and the input reference block in the filtering process carried out each subsequent said time is the filtered reference block obtained in the filtering process carried out the previous said time, and wherein at least one filtering parameter used in the filtering process carried out said first time is used again in the filtering process carried out each subsequent time; and
- encoding said original block by reference to the initial reference block or such a filtered reference block.

According to yet another aspect, the invention relates to a method for encoding a video signal composed of video frames based on block division of said video frames, an original block of a current frame of the video sequence being encoded by reference to a reference block of a reference frame of the video sequence. The encoding method comprises:

- a filtering process, defined by a plurality of parameters, applied to the reference block to obtain a filtered reference block,
- a step of encoding of the difference between the filtered reference block and the original block, wherein
- at least one first parameter of the filtering process is determined based upon a distortion between the original block and a modified block, said modified block being obtained by applying a lossy modification to the filtered reference block, and
- at least one second parameter of the filtering process is determined based upon a distortion between the original block and the filtered reference block.

In a particularly advantageous embodiment, a first parameter of the filtering process is a number of iterations of the filtering of the reference block, where at each iteration, the input reference block to be filtered is the filtered reference block obtained from the previous iteration. An example of second filtering parameters comprises one or several values representative of filters to apply, chosen from a predetermined plurality of filters. Advantageously, one or several filters among a set of oriented filters may be chosen.

Advantageously, the modified block is a decoded block and the lossy modification comprises applying a simulation of encoding and decoding of the filtered reference block.

Advantageously, this encoding method saves computations as compared to an exhaustive determination of all parameters of a filtering process taking into account the original block and the modified block, while still bringing an improvement in terms of compression.

BRIEF DESCRIPTION OF THE DRAWINGS

Other features and advantages will appear in the following description, which is given solely by way of non-limiting example and made with reference to the accompanying drawings, in which:

- Figure 1 is a diagram of a processing device adapted to implement an embodiment of the present invention;
- Figure 2 illustrates a system for processing a digital signal in which the invention is implemented;
- Figure 3 illustrates the main steps of an encoding method according to an embodiment of the invention;
- Figure 4 illustrates the main steps of a method for determining an optimal context function and an associated filter table according to an embodiment of the invention;
- Figure 5 illustrates an example of context function support;
- Figure 6 illustrates the division of a set of samples into sub-sets according to a context function values;
- Figure 7 illustrates an example of filtering according to eight predefined geometric orientations, and
- Figure 8 illustrates the main steps of a method for decoding a predicted block of a video signal encoded according to the embodiment of figure 3.

DETAILED DESCRIPTION OF THE EMBODIMENTS

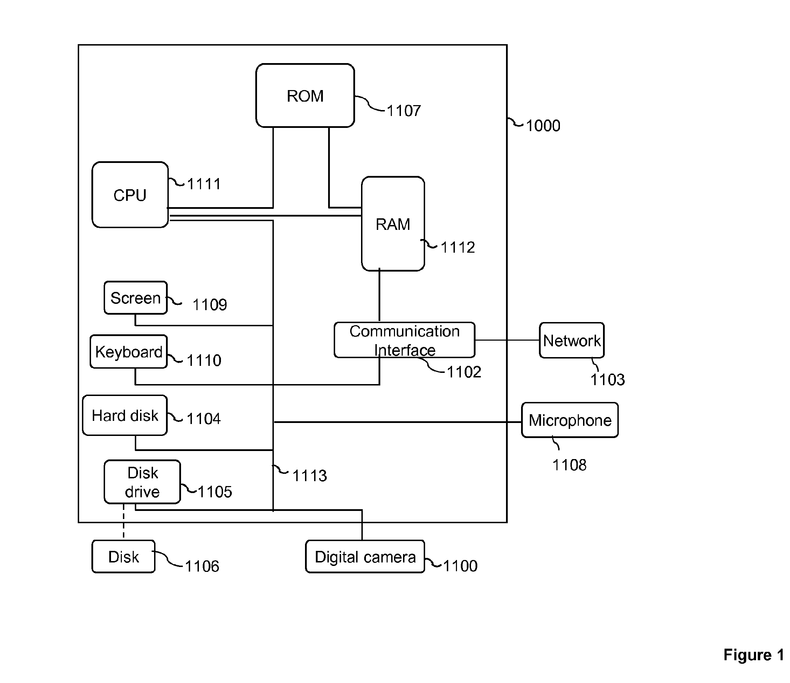

**Figure 1** illustrates a diagram of a processing device 1000 adapted to implement one embodiment of the present invention. The apparatus 1000 is for example a micro-computer, a workstation or a light portable device.
The apparatus 1000 comprises a communication bus 1113 to which there are preferably connected:

- a central processing unit 1111, such as a microprocessor, denoted CPU;
- a read only memory 1107 able to contain computer programs for implementing the invention, denoted ROM;
- a random access memory 1112, denoted RAM, able to contain the executable code of the method of the invention as well as the registers adapted to record variables and parameters necessary for implementing the method of encoding a video signal; and
- a communication interface 1102 connected to a communication network 1103 over which digital data to be processed are transmitted.

Optionally, the apparatus 1000 may also have the following components:

- a data storage means 1104 such as a hard disk, able to contain the programs implementing the invention and data used or produced during the implementation of the invention;
- a disk drive 1105 for a disk 1106, the disk drive being adapted to read data from the disk 1106 or to write data onto said disk;
- a screen 1109 for displaying data and/or serving as a graphical interface with the user, by means of a keyboard 1110 or any other pointing means.

The apparatus 1000 can be connected to various peripherals, such as for example a digital camera 1100 or a microphone 1108, each being connected to an input/output card (not shown) so as to supply multimedia data to the apparatus 1000.
The communication bus affords communication and interoperability between the various elements included in the apparatus 1000 or connected to it. The representation of the bus is not limiting and in particular the central processing unit is able to communicate instructions to any element of the apparatus 1000 directly or by means of another element of the apparatus 1000.
The disk 1106 can be replaced by any information medium such as for example a compact disk (CD-ROM), rewritable or not, a ZIP disk or a memory card and, in general terms, by an information storage means that can be read by a microcomputer or by a microprocessor, integrated or not into the apparatus, possibly removable and adapted to store one or more programs whose execution enables the method according to the invention to be implemented.
The executable code may be stored either in read only memory 1107, on the hard disk 1104 or on a removable digital medium such as for example a disk 1106 as described previously. According to a variant, the executable code of the programs can be received by means of the communication network, via the interface 1102, in order to be stored in one of the storage means of the apparatus 1000 before being executed, such as the hard disk 1104.
The central processing unit 1111 is adapted to control and direct the execution of the instructions or portions of software code of the program or programs according to the invention, instructions that are stored in one of the aforementioned storage means. On powering up, the program or programs that are stored in a non-volatile memory, for example on the hard disk 1104 or in the read only memory 1107, are transferred into the random access memory 1112, which then contains the executable code of the program or programs, as well as registers for storing the variables and parameters necessary for implementing the invention.
In this embodiment, the apparatus is a programmable apparatus which uses software to implement the invention. However, alternatively, the present invention may be implemented in hardware (for example, in the form of an Application Specific Integrated Circuit or ASIC).

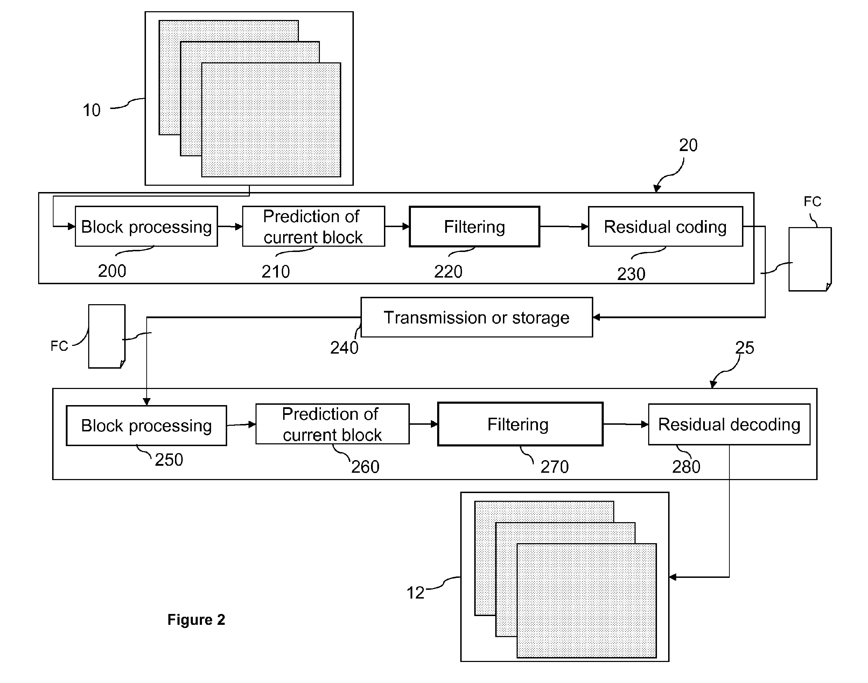

**Figure 2** illustrates a system for processing digital image signals (e.g. digital images or videos), comprising an encoding device 20, a transmission or storage unit 240 and a decoding device 25.
Both the encoding device and the decoding device are processing devices 1000 as described with respect to figure 1.
An original video signal 10 is provided to the encoding device 20 which comprises several modules: block processing 200, prediction of current block 210, filtering 220 and residual encoding 230. Only the modules of the encoding device which are relevant for an embodiment of the invention are represented.
The original video signal 10 is processed in units of blocks, as described above with respect to various MPEG-type video compression formats such as H.264 and MPEG-4 for example. So firstly, each video frame is divided into blocks by module 200. Next, for each current block, module 210 determines a block predictor or reference block. The reference block is either a reference block obtained from one or several reference frames of the video signal, or a block obtained from the same frame as the current block, via an Intra prediction process. For example, H.264 standard compression format, well known in the field of video compression, describes in detail Inter and Intra prediction mechanisms.

In some embodiments, the reference block is selected from an interpolated version of a reference frame of the video signal, as proposed for example in the sub-pixel motion compensation described in H.264 video compression format.

The reference block or predictor block obtained by the prediction module 210 is next filtered according to an embodiment of the invention by the filtering module 220. The filtering module applies a parameterized filtering process, determined by a plurality of parameters. In an embodiment, a filtering process may be applied iteratively a number of times, and each time the filtering is applied, a subset of filters is selected from a larger set of possible filters and applied to the reference block. Therefore, the filtering process can be entirely defined by a plurality of parameters, the first parameter being the number of filtering iterations, if any, and the second parameters being the parameters defining, for each iteration, the selected subset of filters.

The result of the filtering module is a filtered reference block which is subtracted from the current block to obtain a residual block. The residual block is encoded by module 230.

The block prediction 210, filtering 220 and residual block coding 230 are applied for the blocks of a current frame of the video signal. It may be noted that for some blocks, a SKIP mode may be chosen for encoding, meaning that it is not necessary to encode any residual data. For those blocks the modules 220 and 230 are not applied.

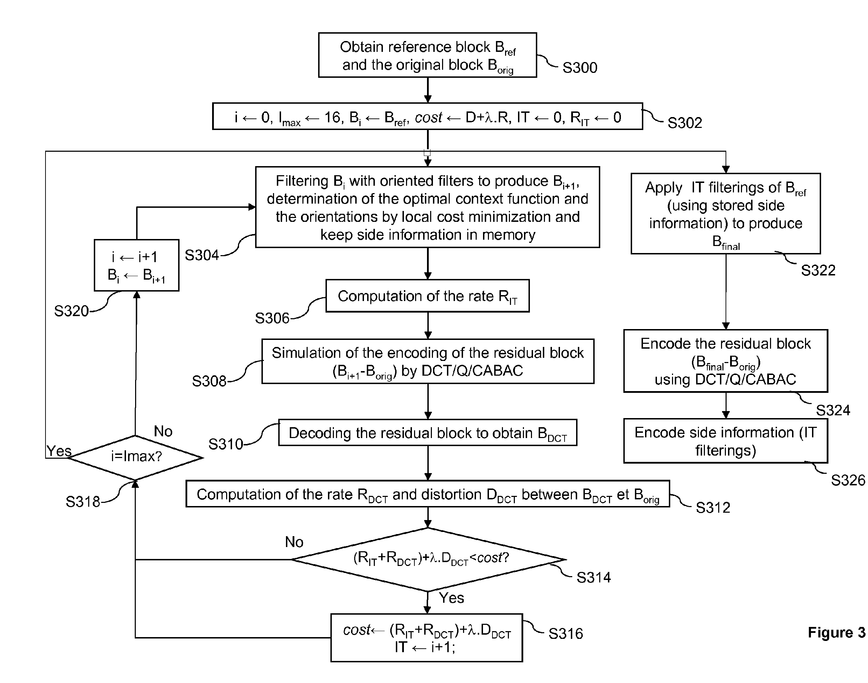

Finally, a compressed bitstream FC is obtained, containing the encoded residuals and other data relative to the encoded video and useful for decoding. In particular, information relative to the filtering applied by the filtering module 220 is transmitted to the decoder, as will be explained hereafter in relation to figure 3.

The compressed bitstream FC comprising the compressed video signal may be stored in a storage device or transmitted to a decoder device by module 240.

In a particular embodiment, the compressed bitstream is stored in a file, and the decoding device 25 is implemented in the same processing device 1000 as the encoding device 20.

In another embodiment, the encoding device 20 is implemented in a server device, the compressed bitstream FC is transmitted to a client device via a communication network, for example the Internet network or a wireless network, and the decoding device 25 is implemented in a client device.

It is supposed that the transmission and/or storage is lossless, so that no errors occur, and the compressed bitstream can be subsequently completely decoded.

The decoding device 25 comprises a block processing module 250, which retrieves the block division from the compressed bitstream and selects the blocks to process. For each block, a predictor block or initial reference block is found by module 260, by decoding information relative to the prediction which has been encoded in the compressed bitstream, for example an index of a reference frame and a motion vector in case of Inter prediction, or an indication of a Intra prediction mode in case of Intra prediction.

The filtering process determined and applied at the encoder is also applied at the decoder by the filtering module 270. In an embodiment, the information on the filtering to be applied to the initial reference block is firstly decoded from the compressed bitstream, and then the filtering process is applied by module 270.

The residual block corresponding to the current block is decoded by the residual decoding module 280 and added to the filtered reference block obtained from module 270.

Finally, a decoded video signal 12 which can be displayed or further processed is obtained.

The flow diagram in **figure 3** illustrates the main steps of an encoding method of a video signal including the determination of a filtering of a reference block as implemented by the filtering module 220.

All the steps of the algorithm represented in figure 3 can be implemented in software and executed by the central processing unit 1111 of the device 1000.

The algorithm of **figure 3** is illustrated for the processing of a given block, since the processing is sequential and carried out block by block.

Firstly, a current block $B_{orig}$ to be encoded of the current frame, also called an original block, and its initial reference block for prediction $B_{ref}$ are obtained at step S300. The block $B_{orig}$ could be of any possible size, but in a preferred embodiment, the sizes recommended in H.264 video coding standard are preferably used: 16x16 pixels, 8x8 pixels, 4x4 pixels or some rectangular combinations of these sizes. The initial reference block $B_{ref}$, as specified earlier, may either be a reference block from a reference frame different from the current frame, which has been obtained by motion estimation or a block obtained by spatial prediction from the current frame, for example by using one of the Intra-prediction modes of H.264. Other methods of obtaining $B_{ref}$ are possible, such as performing a linear combination of several blocks from several previously decoded frames, or extracting a reference block from oversampled previously decoded frames.

Step S300 is followed by initializing step S302 carrying out the initialization of various variables and parameters of the algorithm, namely:

- an index i representing an iteration counter is set to zero;
- a current input reference block $B_i$ is set to the content of the initial reference block $B_{ref}$;
- a variable '*cost*' representing the encoding cost is set to the cost of the original block encoding by reference to the initial reference block using the classical H.264 encoding without further filtering of the reference block. In practice, the variable *cost* is set to $D+\lambda R$, where D and R are respectively the distortion and rate when the block $B_{orig}$ is directly encoded using $B_{ref}$ as a reference block. The parameter $\lambda$ is predetermined for the current frame or for the whole video signal. This parameter controls the balance between compression and distortion, and typically may take one of the following values [0.005, 0.02, 0.03]. The distortion D is typically the square error between $B_{ref}$ and $B_{orig}$, or alternatively some other measure of distance between the blocks. The rate R is typically the number of bits necessary for encoding the residual block ($B_{ref}$-$B_{orig}$);
- a parameter IT defining the optimum number of iterations for the current block, set to zero;
- a variable $R_{IT}$ representing the rate of the side information (see below) for the filtering of the reference block $B_{ref}$ is set to 0; and
- a maximum number of iterations $I_{max}$ is set to a predetermined value, for example a value between 1 and 16. In the preferred embodiment, $I_{max}$=16. In an embodiment, the maximum number of iterations is set at the beginning of the processing, for the entire video signal.

In an alternative simplified embodiment, the number of iterations is set to one, $I_{max}$=1, so as to test whether carrying out a filtering process once on the reference block Bref improves the compression according to a predetermined criterion as defined hereafter or not, so as to select between applying no filtering or applying one filtering to obtain a final reference block.

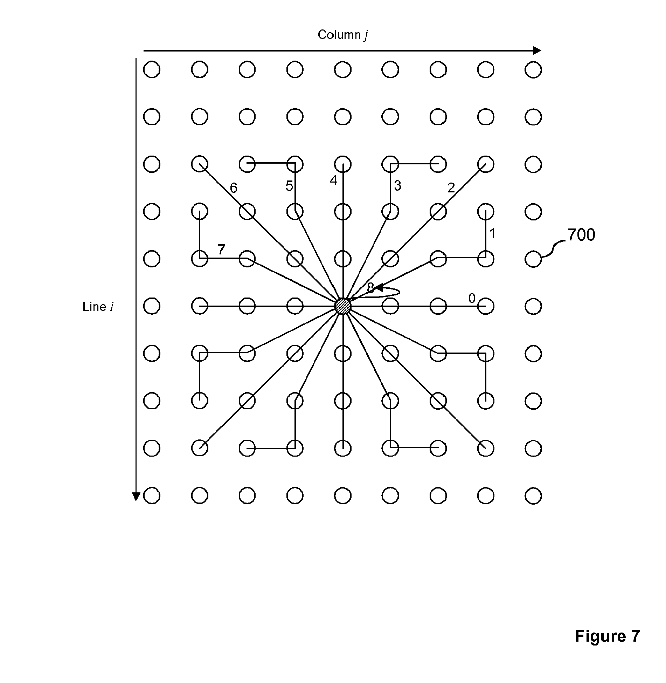

Step S302 is followed by a filtering step S304, during which the input reference block $B_i$ is filtered using a plurality of filters to produce a filtered reference block $B_{i+1}$. In the preferred embodiment, the filters used for filtering are oriented filters, as illustrated in figure 7.

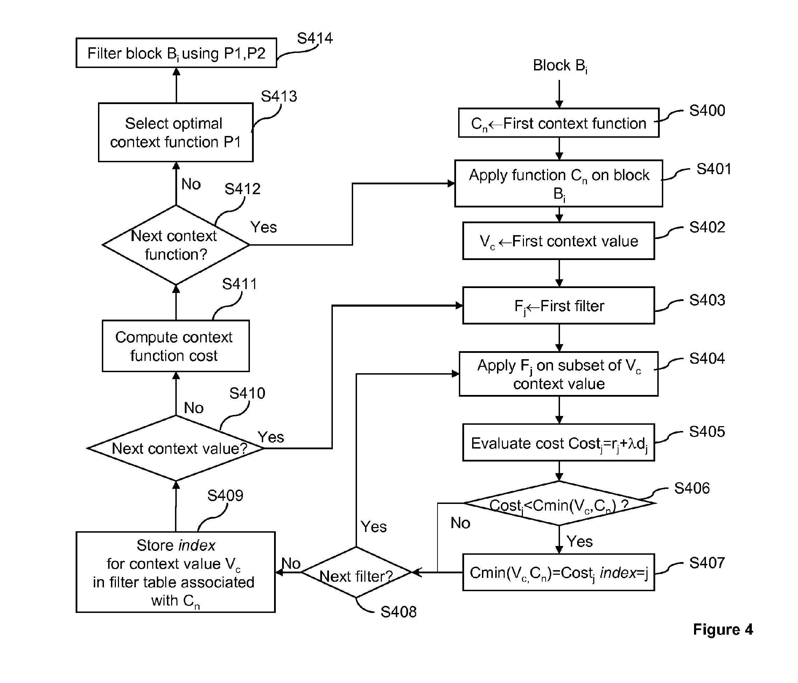

A preferred implementation of step S304 will be described in detail with respect to figure 4.

In a simplified embodiment, step S304 is reduced to filtering block $B_i$ with a fixed predetermined filter F to produce a filtered block $B_{i+1}$.

In the preferred embodiment, the process of filtering of a block $B_i$ is defined by two parameters, namely an index P1 of a context function, determined from among a set of context functions and a list P2 of oriented filters associated with the context function. A context function is used to segment a block $B_i$ to filter, according to the values taken by said context function on block $B_i$. An oriented filter can be associated with each value taken by a context function on block $B_i$, so as to optimize a given cost criterion, for example to minimize a rate-distortion criterion. For example, the parameters P1 and P2 are determined by minimizing the so-called local distortion-rate cost, minimizing the cost R1+$\lambda$D1, where R1 is the rate used to encode parameters P1 and P2 and D1 is the distortion between $B_{orig}$ and $B_{i+1}$.

It should be noted that alternatively, other cost criteria can be applied such as minimizing the rate, minimizing the distortion or minimizing a cost relating to complexity. For example, the cost relating to complexity can be a compromise between the distortion and the number of operations required to decode the block.

In an embodiment, for a given input reference block $B_i$, a context function is selected among a set of 16 context functions, and the associated oriented filters are selected among a set of 9 filters available.

In an alternative embodiment, a context function is selected once for a given initial reference block and then applied subsequently for filtering. In this case, the algorithm described in detail with respect to figure 4 is performed only once for each block to encode. Advantageously, the context function is selected at the first application of the filtering process only. This embodiment saves computational time at the encoding stage since the context function is selected only once whatever the number of iterations of the filtering process, and is advantageous in terms of final bitrate since only one index P1 of a context function is signaled to the decoder. Advantageously, the quality in terms of distortion is still significantly improved by the use of a single context function. Similarly, a list of oriented filters associated to the selected context function may be advantageously determined at the first application of the filtering process only. The same advantages are then obtained.

The filtering of block $B_i$ is therefore defined by an index P1 of the context function selected for block $B_i$ and a list P2 of filter indexes, a filter index being associated with each value taken by context function P1 on block $B_i$. Together, P1 and P2 form an item of information or side information defining the filtering of iteration of index i. If the current filtering iteration i brings an improvement, as explained hereafter, this item of information is encoded in a side information signal and transmitted to the decoder, so that the decoder applies exactly the same filtering at iteration i.

Consequently, once determined, the item of information comprising P1 and P2 should be kept in memory for subsequent encoding into a side information signal.

An implementation of step S304 is described in detail with respect to the flowcharts of **figure 4**. All the steps of the algorithms represented in figure 4 can be implemented in software and executed by the central processing unit 1111 of the device 1000.

The aim of the processing is to select and designate, for each pixel or sample of the block $B_i$, a filter among a predetermined set of filters, so as to satisfy a given optimization criterion which is, in this embodiment, minimizing a rate-distortion cost criterion when applying the selected filter to the pixels of the block for which a context function takes a given value.

The filters may be selected according to the local characteristics of the digital signal being processed. Such local characteristics are captured using a set of predetermined context functions, which represent local variations in the neighbourhood of a sample when applied to the sample.

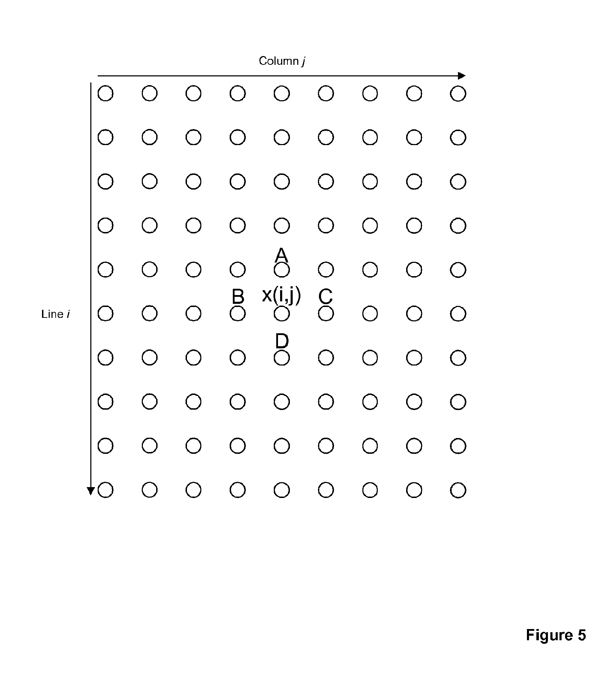

In the preferred embodiment, a set of context functions can be defined for a given sample $x(i,j)$ situated on the $i^{th}$ line and the $j^{th}$ column, as a function of the values of the neighbouring sample A, B, C, D which are respectively situated at spatial position $(i-1,j)$, $(i,j-1)$, $(i, j+1)$, $(i+1,j)$, as illustrated in **figure 5**.

In order to have a relatively simple representation, all context functions used return a value amongst a predetermined set of values, called the context values.

For example, the following set of 16 context functions $C_0$ to $C_{15}$ may be used:

$$C_0(x(i,j))= \quad \begin{array}{l} 0 \text{ if } A \leq B \text{ and } A \leq C \\ 1 \text{ if } A \leq B \text{ and } A > C \\ 2 \text{ if } A > B \text{ and } A \leq C \\ 3 \text{ if } A > B \text{ and } A > C \end{array}$$

$$C_1(x(i,i))= \quad \begin{array}{l} 0 \text{ if } A \leq B \text{ and } A \leq D \\ 1 \text{ if } A \leq B \text{ and } A > D \\ 2 \text{ if } A > B \text{ and } A \leq D \\ 3 \text{ if } A > B \text{ and } A > D \end{array}$$

$$C_2(x(i,j))= \quad \begin{array}{l} 0 \text{ if } A \leq B \text{ and } B \leq C \\ 1 \text{ if } A \leq B \text{ and } B > C \\ 2 \text{ if } A > B \text{ and } B \leq C \\ 3 \text{ if } A > B \text{ and } B > C \end{array}$$

$$C_3(x(i,j))= \quad \begin{array}{l} 0 \text{ if } A \leq B \text{ and } B \leq D \\ 1 \text{ if } A \leq B \text{ and } B > D \\ 2 \text{ if } A > B \text{ and } B \leq D \\ 3 \text{ if } A > B \text{ and } B > D \end{array}$$

$$C_4(x(i,j))= \quad \begin{array}{l} 0 \text{ if } A \leq B \text{ and } C \leq D \\ 1 \text{ if } A \leq B \text{ and } C > D \\ 2 \text{ if } A > B \text{ and } C \leq D \\ 3 \text{ if } A > B \text{ and } C > D \end{array}$$

$$C_5(x(i,j))= \quad \begin{array}{l} 0 \text{ if } A \leq C \text{ and } A \leq D \\ 1 \text{ if } A \leq C \text{ and } A > D \\ 2 \text{ if } A > C \text{ and } A \leq D \\ 3 \text{ if } A > C \text{ and } A > D \end{array}$$

$$C_6(x(i,i))= \quad \begin{array}{l} 0 \text{ if } A \leq C \text{ and } B \leq C \\ 1 \text{ if } A \leq C \text{ and } B > C \\ 2 \text{ if } A > C \text{ and } B \leq C \\ 3 \text{ if } A > C \text{ and } B > C \end{array}$$

$$C_7(x(i,j))= \quad \begin{array}{l} 0 \text{ if } A \leq C \text{ and } B \leq D \\ 1 \text{ if } A \leq C \text{ and } B > D \\ 2 \text{ if } A > C \text{ and } B \leq D \end{array}$$

(continued)

$$C_8(x(i,j))= \quad \begin{array}{l} 3 \text{ if } A>C \text{ and } B>D \\ 0 \text{ if } A\leq C \text{ and } C\leq D \\ 1 \text{ if } A\leq C \text{ and } C>D \\ 2 \text{ if } A>C \text{ and } C\leq D \\ 3 \text{ if } A>C \text{ and } C>D \end{array}$$

$$C_9(x(i,j))= \quad \begin{array}{l} 0 \text{ if } A\leq D \text{ and } B\leq C \\ 1 \text{ if } A\leq D \text{ and } B>C \\ 2 \text{ if } A>D \text{ and } B\leq C \\ 3 \text{ if } A>D \text{ and } B>C \end{array}$$

$$C_{10}(x(i,j))= \quad \begin{array}{l} 0 \text{ if } A\leq D \text{ and } B\leq D \\ 1 \text{ if } A\leq D \text{ and } B>D \\ 2 \text{ if } A>D \text{ and } B\leq D \\ 3 \text{ if } A>D \text{ and } B>D \end{array}$$

$$C_{11}(x(i,j))= \quad \begin{array}{l} 0 \text{ if } A\leq D \text{ and } C\leq D \\ 1 \text{ if } A\leq D \text{ and } C>D \\ 2 \text{ if } A>D \text{ and } C\leq D \\ 3 \text{ if } A>D \text{ and } C>D \end{array}$$

$$C_{12}(x(i,j))= \quad \begin{array}{l} 0 \text{ if } B\leq C \text{ and } B\leq D \\ 1 \text{ if } B\leq C \text{ and } B>D \\ 2 \text{ if } B>C \text{ and } B\leq D \\ 3 \text{ if } B>C \text{ and } B>D \end{array}$$

$$C_{13}(x(i,j))= \quad \begin{array}{l} 0 \text{ if } B\leq C \text{ and } C\leq D \\ 1 \text{ if } B\leq C \text{ and } C>D \\ 2 \text{ if } B>C \text{ and } C\leq D \\ 3 \text{ if } B>C \text{ and } C>D \end{array}$$

$$C_{14}(x(i,j))= \quad \begin{array}{l} 0 \text{ if } B\leq D \text{ and } C\leq D \\ 1 \text{ if } B\leq D \text{ and } C>D \\ 2 \text{ if } B>D \text{ and } C\leq D \\ 3 \text{ if } B>D \text{ and } C>D \end{array}$$

$$C_{15}(x(i,j))= \quad \begin{array}{l} 0 \text{ if } B\leq x(i,j) \text{ and } C\leq D \\ 1 \text{ if } B\leq x(i,j) \text{ and } C>D \\ 2 \text{ if } B> x(i,j) \text{ and } C\leq D \\ 3 \text{ if } B> x(i,j) \text{ and } C>D \end{array}$$

All context functions of this example may take only four context values amongst the set {0,1,2,3}.

Alternatively, other context functions, taking into account the values of other samples from the neighbourhood and taking a different number of context values, for example only two values, may be applied.

The algorithm of figure 4 takes as an input the current input reference block B, and the corresponding original block to be predicted $B_{orig}$.

In the first step S400, the first context function amongst the set of context functions to be tested is selected as the current context function $C_n$.

At step S401 the context function $C_n$ is applied to all samples of the block $B_i$, using the values of the samples A, B, C, D of the neighbourhood as explained above to obtain a context value for each sample.

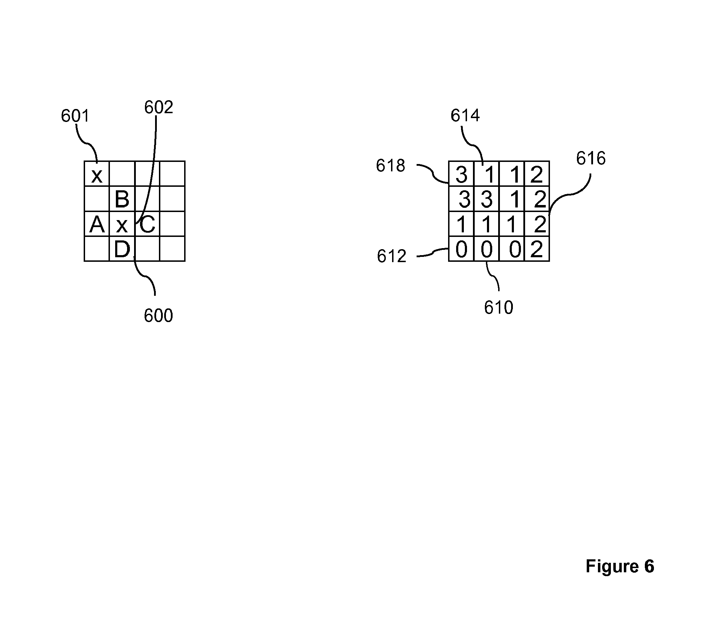

Each sample of the block $B_i$ has an associated context value using context function $C_n$. For illustration purposes, a block of 4x4 samples 600 is represented on **figure 6**. The context function $C_n$ is applied to each of the samples 601, 602 of the block 600, using the adjacent samples A, B, C, D. For a sample situated at the edge of block $B_i$ such as 601, the missing neigbouring values can be replaced by predefined values (e.g. 128), or can be filled by mirroring the value contained inside the block, using axial symmetry over the block edge. Such extension methods are well known in the JPEG2000 compression standard for example, when extending the values at the edge of a block (called "Tile" in JPEG2000).

The block $B_i$ is partitioned into subsets of samples having the same context value, as represented on block 610. The partitions represented on figure 6 comprise: subset 612 of samples having a context value equal to 0, subset 614 of samples having a context value equal to 1, subset 616 of samples having a context value equal to 2 and subset 618 of samples having a context value equal to 3. The samples having a given context value may not be adjacent.

The method according to an embodiment of the invention determines an optimal filter among a predetermined set of filters for each subset of samples having the same context value.

In the preferred embodiment, the set of filters is composed of 9 filters, illustrated schematically in figure 7. The set includes 8 oriented filters and an additional filter, the identity filter, $F_{id}$. The identity filter $F_{id}$ corresponds to no filtering. Including the identity filter makes it possible to select the samples which should be filtered and to keep some samples un-filtered when the filtering does not bring any rate-distortion improvement. The sample to be filtered is pixel $x(i,j)$ situated on the $i^{th}$ line and the $j^{th}$ column. The lines labeled 0 to 7 in the figure correspond to the supports of the filters $F_0$ to $F_7$, that is to say the set of pixels used in the linear filtering operation. Those 8 filters linearly combine 7 samples, so they have a support of size 7. The identity filter $F_{id}$ has a support of size 1.

For example, the filters are:

$$F_0 = a.x(i,j) + b.(x(i,j+1) + x(i,j-1)) + c.(x(i,j+2) + x(i,j-2)) + d.(x(i,j+3) + x(i,j-3))$$

$$F_1 = a.x(i,j) + b.(x(i-1,j+2) + x(i+1,j-2)) + c.(x(i-1,j+3) + x(i+1,j-3)) + d.(x(i-2,j+3) + x(i+2,j-3))$$

$$F_2 = a.x(i,j) + b.(x(i+1,j+1) + x(i-1,j-1)) + c.(x(i+2,j+2) + x(i-2,j-2)) + d.(x(i+3,j+3) + x(i-3,j-3))$$

$$F_3 = a.x(i,j) + b.(x(i+2,j-1) + x(i-2,j+1)) + c.(x(i+3,j-1) + x(i-3,j+1)) + d.(x(i+3,j-2) + x(i-3,j+2))$$

$$F_4 = a.x(i,j) + b.(x(i+1,j) + x(i-1,j)) + c.(x(i+2,j) + x(i-2,j)) + d.(x(i+3,j) + x(i-3,j))$$

$$F_5 = a.x(i,j) + b.(x(i+2,j+1) + x(i-2,j-1)) + c.(x(i+3,j+1) + x(i-3,j-1)) + d.(x(i+3,j+2) + x(i-3,j-2))$$

$$F_6 = a.x(i,j) + b.(x(i-1,j+1) + x(i+1,j-1)) + c.(x(i-2,j+2) + x(i+2,j-2)) + d.(x(i-3,j+3) + x(i+3,j-3))$$

$$F_7 = a.x(i,j) + b.(x(i-1,j-2) + x(i+1,j+2)) + c.(x(i-1,j-3) + x(i+1,j+3)) + d.(x(i-2,j-3) + x(i+2,j+3))$$

$$F_8 = F_{id} = x(i,j)$$

where a,b,c,d have predefined values for all filters of the set.

In an alternative embodiment, a,b,c,d may take different values for different filters.

It is advantageous to use oriented filters $F_0$ to $F_7$ because they are adapted to filter accurately local areas containing oriented edges. The final set from which the filters may be selected contains 9 filters in this example, including the identity filter.

In order to determine an optimal context function and the associated filter table, in the preferred embodiment, a predetermined rate is firstly associated with each filter of the set of filters.

For example, the following rate assignement is proposed:

$$r_i = \text{Rate}(F_i) = \begin{cases} \alpha & \text{if } F_i \text{ is the identity filter} \\ \beta, \alpha \neq \beta & \text{otherwise} \end{cases}$$

where $\alpha$ and $\beta$ are predetermined values. For example, the following values may be taken: $(\alpha, \beta) = (0.51, 4.73)$, which is more favorable to the case where the identity filter is often chosen, i.e. the image or video comprises many flat areas.

Finally, the rate value or values associated with each filter are stored in a rate table for subsequent usage.

Step S401 of figure 4 is followed by step S402, in which the first context value is taken as the current context value $V_c$.

Next the first filter of the set of filters is taken as the current filter $F_j$ (step S403), and is applied to all samples of the subset of samples having a context value equal to $V_c$ at step S404.

A rate-distortion cost or filtering cost associated with filter $F_j$ of the subset of samples of context value $V_c$ of context function $C_n$ is then calculated at step S405, according to the formula: $\text{Cost}_j = r_j + \lambda d_j$, where $r_j$ designates the rate of filter $F_j$ determined as previously explained and $d_j$ is a distortion between the subset of filtered samples being processed and the corresponding samples of the original digital signal $B_{orig}$.

The distortion $d_j$ is simply computed as the square error between the values of the filtered samples and the corresponding values of the original samples. Another alternative distortion calculation, such as the sum of absolute differences, may be used.

The rate-distortion cost value $\text{Cost}_j$ calculated is then compared to a value $\text{Cmin}(V_c, C_n)$ at step S406.

If $\text{Cost}_j$ is lower than $\text{Cmin}(V_c, C_n)$ (test S406) or if the current filter is the first filter of the filter set (j=0) to be tested for context value $V_c$ of context function $C_n$, $\text{Cmin}(V_c, C_n)$ is set equal to $\text{Cost}_j$ and a variable *index* is set equal to j at step S407. The variable *index* stores the index j of the best filter $F_j$, i.e. the filter whose application results in the lowest rate-distortion cost.

If the outcome of the test S406 is negative or after step S407, the test S408 verifies if there is a remaining filter to evaluate, i.e. if the current filter index j is lower than the maximum filter index , equal to 8 in the example of figure 7, in the set of predetermined filters.

In case there is a remaining filter, the filter index j is increased at step S408, and steps S404 to S407 are applied again, with the following filter $F_j$ as current filter.

If all the filters have been evaluated, including the identity filter $F_{id}$, step S408 is followed by step S409 at which the value of the *index* variable is stored for the current value $V_c$ of the context function. For example, the *index* value is stored in a table called filter table, associated with the context function $C_n$. The value index designates the filter $F_{index}$ which minimizes the filtering cost for the current context function $C_n$ and context value $V_c$.

Next, it is checked at step S410 whether there is a remaining context value to be processed, i.e. using the set of possible context values in the example above, if the current context value $V_c$ is less than 3. In case there are more context values to be processed, the next context value is taken as the current context value $V_c$ and the processing returns to step S403.

If all the context values have been processed, it means that the filter table associated with the context function $C_n$ is complete. Using the example above, since each context function may take only four values 0, 1, 2 and 3, a filter table is simply a list of four filter indexes. An example of filter table is $T(B_i, C_n) = [4,0,1,8]$. A sample x(i,j) of block $B_i$ should be filtered with: $F_4$ if the context function takes value 0 on x(i,j), $F_0$ if the context function takes value 1 on x(i,j), $F_1$ if the context function takes value 2 on x(i,j) and $F_8$ if the context function takes value 3 on x(i,j).

The filtering cost $\text{Cmin}(V_c, C_n)$ corresponding to each optimal filter for each subset of samples of the reference block for which the context function $C_n$ outputs a same context value $V_c$ is also stored in memory.

Next, it is possible to compute the cost of the context function $C_n$, *cost($C_n$)*, at step S411, as the sum of the cost $\text{Cmin}(V_c, C_n)$ for all context values $V_c$. The rate of the description of the context function is also added. In the example, the rate of the description of each context function is 4 bits since there are 16 possible context functions. Alternatively, each context function might be attributed an adapted rate, depending on its statistics.

The cost value associated with the current context function $C_n$ is stored in memory, along with the filter table associated with context function $C_n$.

Next it is checked if there are other context functions to process at step S412. In case of positive answer, the following context function is considered as the current context function $C_n$, and the processing returns to step S401 where the current context function is applied to the block $B_i$.

If all the context functions have been processed, step S412 is followed by step S413 at which the optimal context function P1 for the current block $B_i$ is selected according to a context function selection criterion.

In the preferred embodiment, the context function P1 having the lowest cost among *cost($C_n$)* is chosen as the optimal context function. If several context functions have the same cost, any of them may be chosen as 'optimal' context function according to the selection criterion.

The filtering of reference block $B_i$ at this iteration is therefore defined by two filtering parameters, respectively an indication of the selected context function (P1) and the associated filter table (P2). This optimal context function (P1) and the associated filter table (P2) are kept in memory.

Finally, the input reference block $B_i$ is filtered using the filters indicated by the context function P1 at step S414 to obtain the filtered reference block $B_{i+1}$. First the context value of the optimal context function P1 on the current sample x(i,j) is computed by applying the optimal context function. The index of the filter to be applied is given by the filter table P2 based on the context value of x(i,j). For a pixel to be filtered situated at the edge of block $B_i$, the missing neigbouring values can be replaced by predefined values (e.g. 128), or can be filled by mirroring the value contained inside the block, using axial symmetry over the block edge.

Back to figure 3, step S304 of filtering block $B_i$ is followed by a step S306 of computation of the rate $R_{IT}$ of the complete side information useful to describe the filtering of $B_{ref}$ into $B_{i+1}$.

The rate of the side information useful to describe one iteration $R_i$ can be computed at each iteration and added to the total side information rate $R_{IT}$. For a given iteration, the side information comprises firstly a filtering indicator, for example encoded on one bit, indicating whether the current filtering iteration should be applied or not.

If applied, the filtering indicator takes value 1, and the complete side information further comprises parameters P1, indicating the context function selected for block $B_i$ and P2, the list of filters, which may be indicated by their index values, associated with the context values taken by the selected context function.

In the alternative embodiment mentioned above where the parameters P1 and P2 are determined for the first application of the filtering process only, they are indicated only once in the item of information representative of the filterings.

If there is no filtering iteration for the current block, only one filtering indicator bit with value 0 is used.

At step S306, the following computation is applied: $R_{IT}=R_{IT}+R_i$, where $R_i=1+rate(P1,P2)$.

If the current filtering iteration brings an improvement, the side information comprises the value 1 for the filtering indicator and, if applicable, the values of P1 and P2.

The value of the filtering indicator, i.e. the potential rate-distortion improvement brought by an iteration of the reference block filtering, is determined as explained hereafter.

At next step S308, a simulation of the actual encoding of $B_{orig}$ by reference to $B_{i+1}$ is performed.

For example, the method described in the H.264 video coding standard is applied: a DCT is applied on the residual block ($B_{i+1}-B_{orig}$), followed by a quantization Q and an entropy encoding of CABAC type (Context-Based Adaptive Aritithmetic Coding, entropy coding described in H.264 standard compression format). Alternatively, the CAVLC entropy coding (variable length entropy coding also described in the same standard) can be applied. The aim of the simulation step is to obtain the rate $R_{DCT}$ which represents the actual number of bits to be spent for encoding the residual block ($B_{i+1}$- $B_{orig}$).

Next, at step S310, a decoded block $B_{DCT}$ is obtained, by applying entropy decoding, inverse quantization and inverse DCT transform on the encoded residual block, result of step S308, and adding the decoded residual block to the filtered reference block $B_{i+1}$.

The decoded block $B_{DCT}$ is a modified block, obtained by a lossy modification of the original block $B_{orig}$, the lossy modification being brought by the encoding and decoding the residual block corresponding to the difference between the original block $B_{orig}$ and the current filtered reference block $B_{i+1}$.

At the following step S312, the rate $R_{DCT}$ for encoding the residual block ($B_{i+1}-B_{orig}$) is obtained, as well as the distortion $D_{DCT}$ between the decoded simulated decoded block $B_{DCT}$ and the original block to be coded $B_{orig}$.

Next, a criterion taking into account the original block $B_{orig}$ and the modified block $B_{DCT}$ is applied in order to determine whether the current application of the filtering process brings an improvement for the encoding of the current block by reference to the filtered reference block $B_{i+1}$.

In the preferred embodiment, the test S314 checks whether the overall rate-distortion cost decreases or not, therefore checking whether the current iteration of the filtering brings an overall improvement. In practice, the cost $(R_{IT}+R_{DCT})+\lambda D_{DCT}$ is compared to the variable *cost* previously described.

Note that in this formula, the overall rate for encoding the filtering parameters P1, P2 for all the filtering iterations, or only for the first filtering if applicable, and the corresponding residual block is taken into account.

Alternatively, other cost criteria taking into account the original block and the modified block than the rate-distortion cost may be applied, as mentioned above. For example, other cost criteria may be: minimizing the rate, minimizing the distortion or minimizing a cost relating to complexity. In particular, the cost relating to complexity can be a compromise between the distortion and the number of operations required to decode the block.

If the answer to the test S314 is positive, meaning that the calculated rate-distortion cost taking into account the encoding of the side information necessary to describe the filtering iteration is lower than the previously stored value of the rate-distortion cost for the encoding of the current block $B_{orig}$, step S314 is followed by step S316 at which the variable *cost* and the variable IT representing the optimal number of iterations are updated. Namely, $cost=(R_{IT}+R_{DCT})+\lambda D_{DCT}$, meaning that the variable *cost* is set to the current minimum value of the rate-distortion cost. The variable IT is set to i+1.

In case of negative answer at test S314, or after step S316, step S318 is carried out for testing whether the current number of iterations has reached the maximum number of iterations $I_{max}$. If the maximum number of iterations has not been reached, then step S318 is followed by step S320 at which the variable i is increased to i+1, and the current input reference block $B_i$ is set to the filtered reference block $B_{i+1}$. Next, steps S304 to S318 are repeated.

If the maximum number of iterations has been reached (answer 'yes' to test S318), step S318 is followed by step S322, at which the IT filterings are sequentially applied, using the parameters P1 and P2 previously stored for each iteration i, to produce a final reference block $B_{final}$.

Alternatively, $B_{final}$ may be retrieved from memory, if every result of the filtering of the block Bi is stored after step S304.

It should be noted that in the case where the maximum number of iterations is equal to 1 ($I_{max}$=1), the number IT may be equal to 0 or 1. In case the number IT is equal to 0, the step S322 is reduced to selecting the reference block $B_{ref}$ as final reference block $B_{final}$, without actually applying a filtering on $B_{ref}$.

More generally, given a maximum number of iterations tested ($I_{max}$), the number of filterings to obtain the final reference block IT is any number between 0 (no filtering) and $I_{max}$.

Finally, the residual block resulting from the difference between the original block to be coded $B_{orig}$ and the final reference block $B_{final}$ is computed and encoded by applying DCT, quantization and entropy encoding of CABAC type for example as explained previously. The block $B_{orig}$ is therefore encoded by reference to the final reference block $B_{final}$.

Further, an item of information referred to as side information, for describing whether the final reference block is obtained by applying a filtering process to an input reference block, and in case one or several filterings are applied (e.g. IT>0), for describing the IT filterings to be applied on the reference block $B_{ref}$ to obtain $B_{final}$ is also encoded at step S326. For each iteration actually processed (i.e. iteration i, with i less than IT), the side information contains a filtering indicator equal to 1 followed by the encoding of parameters P1 and P2 corresponding to iteration i. Finally, a filtering indicator equal to 0 is inserted in the side information, to indicate that the iteration of the filtering process stops.

In case no filtering is necessary, a filtering indicator equal to 0 is simply encoded as an item of information relative to the filtering of the reference block.

In a simple embodiment, P1 represents the index of the context function selected for block $B_i$ and is encoded using a conventional encoding on a predetermined number of bits, for example on 4 bits if 16 context functions are available. Next, P2 is encoded on a predetermined number of bits, depending on the number of context values and the number of filters. For example, P2 may be a filter table containing 4 indexes, one for each context value, each index indicating a filter of the set of predetermined filters and being encoded on 3 bits, since there are 9 possible filters.

More sophisticated encodings, such as an entropy encoding of the parameters P1 and P2 may be alternatively applied.

In an alternative embodiment, the number of iterations IT is first encoded, followed by IT times the filtering parameters (P1, P2), where each of P1 and P2 is encoded on a given number of bits. For a given block, IT may be equal to zero.

In yet another alternative embodiment, when the filtering parameters (P1,P2) are computed for the first filter application only, simply the number of iterations and the values of P1, P2 determined for the first filtering are encoded in an item of information relative to the filtering of the reference block.

In yet another alternative embodiment, only the parameter P1 representative of the context function is determined and encoded once in the item of information relative to the filtering of the reference block, whereas the parameters P2 representative of the associated filter indexes are encoded for each filtering application.

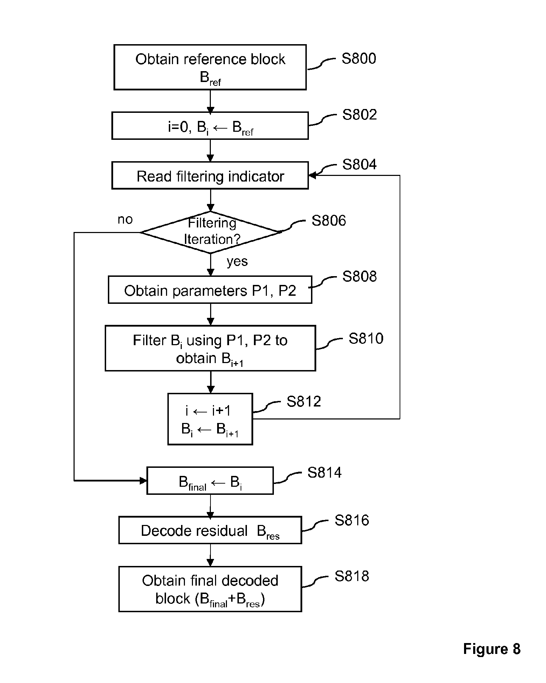

The flow diagram in **figure 8** illustrates the main steps of a method for decoding a predicted block of a video signal encoded according to an embodiment of the invention.

All the steps of the algorithm represented in figure 8 can be implemented in software and executed by the central processing unit 1111 of the device 1000.

The compressed video signal or bitstream is received at the decoder and comprises in particular the side information generated at the encoder containing items of information representative of the filtering or filterings to be carried out on the reference blocks of the video.

In this embodiment, the side information comprises, for each block encoded by prediction using a reference block, a filtering indicator indicating whether a filtering iteration should be carried out or not, followed by the corresponding filtering parameters if the filtering iteration indicator is positive.

In an alternative simplified embodiment, the same filtering parameters are applied at each iteration, so the side information comprises only a filtering indicator indicating whether a filtering iteration should be carried out. In an embodiment, only an item of information representative of the number of filtering iterations is carried in the side information.

In should be noted that the item of information or filtering indicator is also representative of the fact that for a given block, no filtering has been carried out on the input reference block, in particular in the simplified alternative embodiment wherein either no filtering or one filtering is carried out on the input reference block.

The flowchart of figure 8 describes the steps of a decoding algorithm applied for the decoding of a current block to be decoded, which was encoded by prediction to a reference block at the encoder side.

Firstly, at step S800, an initial reference block $B_{ref}$ corresponding to the current block to be decoded is obtained. The initial reference block is obtained by extracting corresponding information from the bitstream, which either indicates an Inter-prediction, so that $B_{ref}$ is a block of another frame of the video, indicated by a motion vector, or an Intra-prediction, so $B_{ref}$ is computed by an Intra prediction mode indicated in the bitstream.

Next at initializing step S802, a variable i is set to 0 and a current input reference block to be processed $B_i$ is set to the contents of $B_{ref}$.

In the preferred embodiment, step S802 is followed by step S804 consisting in reading a filtering indicator, indicating whether a filtering iteration should be carried out on the reference block. As explained above, in one embodiment, the side information transmitted for a block comprises a filtering indicator encoded on one bit which indicates whether or not to apply an oriented filtering, so as to indicate the IT filtering iterations to be carried out on a reference block.

In case of positive indication of the filtering indicator (answer 'yes' to step S806), the filtering parameters are obtained from the side information at step S808.

Similarly to the encoding, the filtering parameters P1, P2 respectively comprise an indication P1 of the context function selected for the current block, typically an index of a context function from a set of context functions and a filter table P2 indicating a filter index for each possible value of the context function.

Similarly to the encoding, in alternative embodiments the filtering parameters may be predetermined, in which case the step S808 is optional, and the filtering parameters do not need to be obtained from the side information.

Next, the filtering is applied on block $B_i$ using parameters P1, P2 obtained at step S808 to output a filtered block $B_{i+1}$. Similarly to the encoder, the filtering consists in applying the context function of index indicated by P1 on the block $B_i$ to obtain a context value for each pixel of the block. Then, for each pixel of block $B_i$, apply the filter $F_j$ among the set of predetermined filters which corresponds to the context value $V_c$ taken by the context function in the filter table P2.

After obtaining a filtered block $B_{i+1}$, the variable i is increased by one and the current block $B_i$ is set to the content of $B_{i+1}$ at step S812.

The processing then returns to the step S804 of reading the following filtering indicator from the side information.

In case of negative indication by the filtering indicator (answer 'no' to the test S806), meaning that there is no supplementary filtering iteration to carry out, the final reference block $B_{final}$ is set to the content of the current filtered block $B_i$.

Note that for some block, the filtering indicator indicates no filtering, therefore the final reference block $B_{final}$ is equal to the initial reference block.

Then the received residual block is decoded at step S816 to obtain a decoded residual $B_{res}$. Note that the decoding of the residual block received for the current block can be carried out earlier and stored in memory. The decoding of the residual block $B_{res}$ consists in applying an entropy decoding, followed by an inverse quantization and an inverse DCT transform.

Last, the final decoded block is obtained (S818) by adding the decoded residual block $B_{res}$ to the final reference block $B_{final}$.

In an alternative embodiment, the number of filtering iterations for the current block may be computed from the received side information, and then the IT filterings of the reference block $B_{ref}$ are successively applied, each filtering using the corresponding parameters P1,P2 extracted from the side information.

**Claims**

1. Method for encoding a video signal composed of video frames, the video frames comprising blocks, **characterized in that** it comprises, for the encoding of at least one original block ($B_{orig}$) of a frame of the video signal, the steps of:

   - obtaining (S300) an initial reference block ($B_{ref}$) corresponding to said original block ($B_{orig}$),
   - carrying out, one or more times, a filtering process which inputs a reference block ($B_i$) and which filters the input reference block to obtain a filtered reference block $(B_{i+1})$, wherein the input reference block in the filtering process carried out the first said time is said initial reference block $(B_{ref})$, and the input reference block in the filtering process carried out each subsequent said time, if any, is the filtered reference block obtained in the filtering process carried out the previous said time,

- determining (S316), based on a predetermined criterion, a final reference block $(B_{final})$ from among the initial reference block and a filtered reference block or blocks obtained by carrying out the filtering process said one or more times, and

- encoding (S324) said original block by reference to said final reference block $(B_{final})$.

2. A method according to claim 1, comprising, after each applying of the filtering process (S304), a step of obtaining a modified block $(B_{DCT})$ resulting from encoding (S308) and decoding (S310) of the difference between the filtered reference block and the original block, and wherein said predetermined criterion takes into account said original block and said modified block obtained.

3. A method according to any of claims 1 or 2, comprising, before at least one step of applying a filtering process, a step of determining (S304, S409, S413) at least one filtering parameter (P1, P2) of said filtering process to apply, and wherein the at least one filtering parameter determined is used in said filtering process.

4. A method according to claim 3, wherein said step of determining at least one filtering parameter is applied only for the first application of the filtering process, said parameters determined being systematically used in the filtering process carried out each subsequent said time.

5. A method according to any of claims 3 or 4, wherein in the step of determining step at least one filtering parameter, said at least one filtering parameter (P1,P2) is determined by minimization (S406, S413) of a criterion taking into account said original block and said filtered reference block.

6. A method according to any of claims 3 to 5, wherein said at least one filtering parameter comprises at least one value (P2) representative of a filter selected from a predetermined set of filters.

7. A method according to claim 6, wherein said at least one filtering parameter comprises at least one value (P1) representative of a context function $(C_n)$, wherein a context function is a function that, when applied to a given sample of a block of samples, takes into account a predetermined number of other samples of said block of samples and outputs a context value.

8. A method according to claim 7, wherein the step of determining at least one filtering parameter comprises:

- applying (S401) a context function of a predetermined set of context functions to said input reference block,
- for each subset of samples of said input reference block for which said context function outputs a same context value, selecting (S406, S407, S409) a filter of said set of predetermined filters, associated with said context value, which minimizes a filtering cost on said subset of samples.

9. A method according to claims 1 to 8, further comprising a step of encoding at least one item of information indicating whether at least one filtering process is applied to obtain said final reference block.

10. A method according to claim 9, wherein said at least one item of information is representative of a number of times said filtering process has been applied to an input reference block to obtain said final reference block.

11. A method according to claim 10 depending on claim 2, further comprising, for each said modified block, a step of obtaining a rate associated with such an item of information representative of the number of filterings applied to obtain said modified block, which obtained rate is taken into account in said predetermined criterion for determining said final reference block.

12. A method according to any of claim 10 or 11, wherein said final reference block is obtained by at least one application of said filtering process, and wherein said item of information comprises, for each application of the filtering process, a filtering indicator representative of an application of said filtering process, followed by an information representative of said at least one filtering parameter determined for said application of the filtering process.

13. Method for decoding a compressed bitstream comprising a video signal composed of video frames, the video frames comprising blocks, **characterized in that** it comprises, for the decoding of at least one block to be decoded of a frame of the video signal, the steps of:

- obtaining (S800) an initial reference block ($B_{ref}$) for said block to be decoded,
- extracting an item of information from said compressed bitstream,
- obtaining, based on said item of information, a final reference block for said block to be decoded,
said final reference block being either the initial reference block or a filtered reference block, said filtered reference block being obtained by carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time, and
- decoding (S816, S818) the block to be decoded by reference to said final reference block obtained.

14. A decoding method according to claim 13, wherein said item of information is representative of the number of times said filtering process is applied to obtain said final reference block.

15. A compressed bitstream comprising a video signal composed of video frames, the video frames comprising blocks, and at least one original block ($B_{orig}$) of a frame of the video signal being encoded by obtaining (S300) an initial reference block ($B_{ref}$) corresponding to said original block ($B_{orig}$), and by carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time, and by determining (S316), based on a predetermined criterion, a final reference block ($B_{final}$) from among the initial reference block and the filtered reference block or blocks obtained by carrying out the filtering process said one or more times, and by encoding (S324) said original block by reference to said final reference block ($B_{final}$), said compressed bitstream comprising:

data representative of an encoded difference between said original block and said final reference block, and at least one item of information indicating how said final reference block was determined.

16. A compressed bitstream according to claim 15, wherein at least one said item of information indicates whether the final reference block ($B_{final}$) is said initial reference block or is such a filtered reference block obtained by carrying out the filtering process said one or more times.

17. A compressed bitstream according to claim 15, wherein at least one said item of information indicates a number of times said filtering process was carried out to obtain the final reference block.

18. Device for encoding a video signal composed of video frames, the video frames comprising blocks, **characterized in that** it comprises, for the encoding of at least one original block of a frame of the video signal:

- means for obtaining an initial reference block ($B_{ref}$) corresponding to said original block ($B_{orig}$),
- means for carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time,
- means for determining, based on a predetermined criterion, a final reference block ($B_{final}$) from among the initial reference block and a filtered reference block or blocks obtained by carrying out the filtering process said one or more times, and
- means for encoding said original block by reference to said final reference block ($B_{final}$).

19. Device for decoding a compressed bitstream comprising a video signal composed of video frames, the video frames comprising blocks, **characterized in that** it comprises, for the decoding of at least one block to be decoded of a frame of the video signal:

- means for obtaining an initial reference block ($B_{ref}$) for said block to be decoded,

- means for extracting an item of information from said compressed bitstream,
- means for obtaining, based on said item of information, a final reference block for said block to be decoded, said final reference block being either the initial reference block or a filtered reference block, said filtered reference block being obtained by carrying out, one or more times, a filtering process which inputs a reference block ($B_i$) and which filters the input reference block to obtain a filtered reference block ($B_{i+1}$), wherein the input reference block in the filtering process carried out the first said time is said initial reference block ($B_{ref}$), and the input reference block in the filtering process carried out each subsequent said time, if any, is the filtered reference block obtained in the filtering process carried out the previous said time, and
- means for decoding the block to be decoded by reference to said final reference block obtained.

20. A computer program which, when run on a computer, causes the computer to carry out a method for encoding a video signal according to any one of claims 1 to 12 or a method for decoding a compressed bitstream according to any one of claims 13 to 14.

21. A computer-readable storage medium storing a program according to claim 20.

Figure 1

EP 2 398 240 A1

10

| Block processing | → | Prediction of current block | → | Filtering | → | Residual coding |

200          210          220          230

20

FC

Transmission or storage

240

FC

25

| Block processing | → | Prediction of current block | → | Filtering | → | Residual decoding |

250          260          270          280

12

**Figure 2**

```
                          ┌─────────────────────────────┐
                          │  Obtain reference block B_ref │
                          │  and the original block B_orig │──╮ S300
                          └─────────────────────────────┘
                                       │
      ┌───────────────────────────────────────────────────────────────────┐
      │ i ← 0, I_max ← 16, B_i ← B_ref, cost ← D+λ.R, IT ← 0, R_IT ← 0     │──╮ S302
      └───────────────────────────────────────────────────────────────────┘
```

$i \leftarrow 0, I_{max} \leftarrow 16, B_i \leftarrow B_{ref}, cost \leftarrow D+\lambda.R, IT \leftarrow 0, R_{IT} \leftarrow 0$ — S302

Filtering $B_i$ with oriented filters to produce $B_{i+1}$, determination of the optimal context function and the orientations by local cost minimization and keep side information in memory — S304

$i \leftarrow i+1$
$B_i \leftarrow B_{i+1}$ — S320

Apply IT filterings of $B_{ref}$ (using stored side information) to produce $B_{final}$ — S322

Computation of the rate $R_{IT}$ — S306

Simulation of the encoding of the residual block $(B_{i+1}-B_{orig})$ by DCT/Q/CABAC — S308

Encode the residual block $(B_{final}-B_{orig})$ using DCT/Q/CABAC — S324

Decoding the residual block to obtain $B_{DCT}$ — S310

Encode side information (IT filterings) — S326

i=Imax? — S318   Yes / No

Computation of the rate $R_{DCT}$ and distortion $D_{DCT}$ between $B_{DCT}$ et $B_{orig}$ — S312

$(R_{IT}+R_{DCT})+\lambda.D_{DCT}<cost?$ — S314   No / Yes

$cost \leftarrow (R_{IT}+R_{DCT})+\lambda.D_{DCT}$
$IT \leftarrow i+1;$ — S316

**Figure 3**

Filter block $B_i$ using P1,P2 — S414

Select optimal
context function P1 — S413

Next context
function? — S412

No

Yes

Compute context
function cost — S411

Next context value? — S410

No

Yes

Store *index*
for context value $V_c$
in filter table associated
with $C_n$ — S409

No

Next filter? — S408

Yes

Block $B_i$

$C_n \leftarrow$ First context function — S400

Apply function $C_n$ on block
$B_i$ — S401

$V_c \leftarrow$ First context value — S402

$F_j \leftarrow$ First filter — S403

Apply $F_j$ on subset of $V_c$
context value — S404

Evaluate cost $Cost_j = r_j + \lambda d_j$ — S405

$Cost_j < Cmin(V_c, C_n)$ ? — S406

No

Yes

$Cmin(V_c, C_n) = Cost_j$ *index=j* — S407

**Figure 4**

Figure 5

EP 2 398 240 A1

**Figure 6**

Figure 7

```
                    ┌─────────────────────────┐
                    │   Obtain reference block │─── S800
                    │           B_ref          │
                    └─────────────────────────┘
                                 │
                                 ▼
                    ┌─────────────────────────┐
                    │   i=0, B_i ← B_ref       │─── S802
                    └─────────────────────────┘
                                 │
                                 ▼
                    ┌─────────────────────────┐
                    │  Read filtering indicator│◄────────── S804
                    └─────────────────────────┘         │
                                 │                       │
              no                 ▼                       │
        ◄──────────────    ◇ Filtering ◇ ─── S806       │
        │                    Iteration?                  │
        │                        │                       │
        │                     yes│                       │
        │                        ▼                       │
        │            ┌─────────────────────────┐         │
        │            │  Obtain parameters P1, P2│─── S808 │
        │            └─────────────────────────┘         │
        │                        │                       │
        │                        ▼                       │
        │            ┌─────────────────────────┐         │
        │            │  Filter B_i using P1, P2 │─── S810 │
        │            │     to obtain B_i+1      │         │
        │            └─────────────────────────┘         │
        │                        │                       │
        │                        ▼                       │
        │              ┌───────────────────┐             │
        │              │   i ← i+1         │─── S812     │
        │              │   B_i ← B_i+1     │─────────────┘
        │              └───────────────────┘
        │
        │                        
        ▼            ┌─────────────────────────┐
        └──────────► │   B_final ← B_i          │─── S814
                     └─────────────────────────┘
                                 │
                                 ▼
                     ┌─────────────────────────┐
                     │   Decode residual  B_res │─── S816
                     └─────────────────────────┘
                                 │
                                 ▼
                     ┌─────────────────────────┐
                     │  Obtain final decoded    │─── S818
                     │  block (B_final+B_res)   │
                     └─────────────────────────┘
```

Figure 8

Europäisches
Patentamt

European
Patent Office

Office européen
des brevets

# EUROPEAN SEARCH REPORT

**Application Number**

EP 10 16 6229

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/048489 A2 (THOMSON LICENSING [FR]; HAR-NOY SHAY [US]; DIVORRA ESCODA OSCAR [US];) 24 April 2008 (2008-04-24) | 1,2,4, 9-21 | INV. H04N7/26 H04N7/50 |
| Y | * the whole document * | 3,5-8 | |
| Y | FR 2 927 744 A1 (CANON KK [JP]) 21 August 2009 (2009-08-21) | 3,5-8 | |
| A | * the whole document * | 1,2,4, 9-21 | |
| A | ZAKHOR A: "Iterative procedures for reduction of blocking effects in transform image coding" IEEE TRANSACTIONS ON CIRCUITS AND SYSTEMS FOR VIDEO TECHNOLOGY, vol. 2, no. 1, March 1992 (1992-03), pages 91-95, XP002598030 ISSN: 1051-8215 DOI: 10.1109/76.134377 * the whole document * | 1-21 | |

TECHNICAL FIELDS
SEARCHED (IPC)

H04N

The present search report has been drawn up for all claims

| Place of search | Date of completion of the search | Examiner |
|---|---|---|
| Munich | 26 August 2010 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 16 6229

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2010

| Patent document cited in search report | | Publication date | Patent family member(s) | | Publication date |
|---|---|---|---|---|---|
| WO 2008048489 | A2 | 24-04-2008 | CN | 101711481 A | 19-05-2010 |
| | | | EP | 2082585 A2 | 29-07-2009 |
| | | | JP | 2010507335 T | 04-03-2010 |
| | | | KR | 20090079894 A | 22-07-2009 |
| | | | US | 2009238276 A1 | 24-09-2009 |
| FR 2927744 | A1 | 21-08-2009 | NONE | | |

For more details about this annex : see Official Journal of the European Patent Office, No. 12/82

## REFERENCES CITED IN THE DESCRIPTION

**Patent documents cited in the description**

- WO 2009126936 A